# FASCICULE DE BREVET EUROPEEN

(11) **EP 3 517 794 B1**
(45) Date de publication et mention de la délivrance du brevet: **18.09.2024**
(21) Numéro de dépôt: 18211200.3
(22) Date de dépôt: 10.12.2018
(51) Int. Cl.: F16B 21/00, B66C 23/28, F16B 21/14, F16B 41/00

(54) **SYSTÈME DE MONTAGE POUR UNE GRUE, GRUE AVEC UN TEL SYSTÈME DE MONTAGE ET PROCÉDÉ D'EXÉCUTION D'UN MONTAGE SUR UNE TELLE GRUE**
MONTAGESYSTEM FÜR EINEN KRAN, KRAN MIT EINEM SOLCHEN MONTAGESYSTEM UND MONTAGEAUSFÜHRUNGSVERFAHREN AUF EINEM SOLCHEN KRAN
ASSEMBLY SYSTEM FOR A CRANE, CRANE WITH SUCH AN ASSEMBLY SYSTEM AND METHOD FOR EXECUTING ASSEMBLY ON SUCH A CRANE

(30) Priorité: 30.01.2018 FR 1870095
(43) Date de publication de la demande: 31.07.2019
(73) Titulaire: Manitowoc Crane Group France SAS, 69574 Dardilly Cedex (FR)
(72) Inventeur: Dubois, Frédéric, 42750 Saint Denis de Cabanne (FR); Ecabert, Bernard, 69210 Lentilly (FR)
(74) Mandataire: Germain Maureau

(56) Documents cités:
- EP-A1- 1 873 113
- EP-A1- 2 767 499
- EP-A1- 3 184 479
- CN-A- 102 092 648
- DE-A1- 102010 008 153
- DE-A1- 102015 002 237
- JP-A- S57 186 606

## Description

L'invention concerne un système de montage pour une grue, une grue avec un tel système de montage ainsi qu'un procédé d'exécution d'un montage sur une telle grue.

Le document DE 10 2015 002 237 A1 a fait connaître un système de montage pour une grue selon le préambule de la revendication 1. Ce système de montage permet d'introduire un tronçon de mât dans une structure de tour et de l'en retirer. Des capteurs sont prévus pour accroître la sécurité du processus de montage, lesquels surveillent l'état d'un élément de connexion. Le recours à des capteurs est coûteux en efforts et en argent. Une défaillance du capteur est susceptible de causer des dommages aux personnes.

Les documents JP S57 186 606 A, DE 10 2010 008 153 A1 et EP 2 767 499 A1 chacun ont fait connaître des éléments de fixation qui empêchent le desserrage accidentel d'un élément de connexion.

L'invention vise à augmenter la sécurité d'un processus de montage, cette sécurité accrue devant en particulier être assurée sans coûts excessifs.

Ce problème est résolu par un système de montage pour une grue, avec une cage déplaçable le long d'une tour de la grue, laquelle peut être raccordée de manière amovible à une partie supérieure de la grue par des éléments de connexion, et avec au moins un élément de fixation pour une fixation empêchant le desserrage accidentel d'au moins un élément de connexion.

Ce problème est ainsi résolu par une grue avec une tour, une partie supérieure pouvant être raccordée à la tour, et avec un système de montage selon la revendication 1.

En plus, ce problème est résolu par un procédé de montage d'un tronçon de mât dans une tour d'une grue selon la revendication 8.

Le coeur de l'invention est qu'au moins un élément de fixation est prévu pour empêcher un desserrage accidentel d'un élément de connexion. L'invention exclut notamment le retrait accidentel d'une goupille de fixation d'une connexion à boulon, telle que notamment divulguée par le document FR 2 397 363 A. L'élément de connexion sert à raccorder de manière amovible une partie supérieure de la grue à une cage. Du fait qu'il est exclu que les éléments de connexion soient desserrés de manière accidentelle, il est empêché que la partie supérieure se détache accidentellement au moins en partie de la cage, en particulier en cours de montage, et notamment en basculant. Tout problème de sécurité posé par une exécution incorrecte du processus de montage est exclu. La sécurité du montage est accrue. L'élément de fixation est réalisé de sorte que seul un opérateur déterminé soit apte à desserrer l'élément de fixation. Le desserrage de l'élément de fixation est exclusivement possible à l'aide d'un moyen de déblocage, lequel n'est notamment à la disposition que de la seule personne autorisée. Il a été reconnu que des dispositifs de surveillance coûteux, en particulier sous la forme de capteurs, deviennent superflus quand une manipulation incorrecte des éléments de connexion peut être fiablement exclue par des éléments de fixation appropriés. Ledit au moins un élément de fixation est en particulier un élément de fixation mécanique. Ledit au moins un élément de fixation est mécaniquement accouplé à l'élément de connexion. Ledit au moins un élément de fixation est d'un modèle peu coûteux. Ledit au moins un élément de fixation est p. ex. un composant standard, disponible de manière économique. Plusieurs éléments de fixation, en particulier au moins deux, en particulier au moins quatre, sont prévus pour le raccordement de la partie supérieure sur la cage. La grue est en particulier une grue à tour. La partie supérieure comprend en particulier une couronne d'orientation, une flèche et/ou un contrepoids pour la flèche.

Un système de montage, dont les éléments de connexion coopèrent chacun avec un élément de connexion complémentaire de cage et avec un élément de connexion complémentaire de partie supérieure, assure le raccordement direct de la cage à la partie supérieure.

Un système de montage, dont les éléments de connexion complémentaires sont réalisés comme ouvertures alignées, dans lesquelles l'élément de connexion peut être inséré, permet un raccordement particulièrement aisé de la cage avec la partie supérieure.

Un système de montage, dont l'élément de fixation empêche un retrait accidentel de l'élément de connexion hors des éléments de connexion complémentaires alignés, empêche fiablement que ledit au moins un élément de connexion soit accidentellement retiré des éléments de connexion complémentaires alignés. La sécurité du processus de montage en est encore accrue.

Un système de montage, dont l'élément de fixation empêche le retrait accidentel de l'élément de connexion hors des éléments de connexion complémentaires alignés à l'aide d'au moins une saillie transversale présentée en particulier sur une surface périphérique de l'élément de connexion, empêche mécaniquement un retrait accidentel direct de l'élément de connexion. La manipulation de l'élément de fixation avec au moins une saillie transversale exclut toute erreur. Un retrait de l'élément de connexion hors des éléments de connexion complémentaires est mécaniquement impossible du fait de la saillie transversale. Un retrait de l'élément de connexion n'est possible que si l'élément de fixation est sciemment retiré de l'élément de connexion. L'élément de fixation est maintenu de manière imperdable sur l'élément de connexion.

Un système de montage selon la revendication 1, dont l'élément de fixation est réalisé sous forme de cadenas passé en particulier dans un alésage transversal de l'élément de connexion, est réalisé de manière simple. Un cadenas est un composant simple, disponible de manière économique comme article standard. Le cadenas est notamment passé dans un alésage transversal de l'élément de connexion et dépasse transversalement de l'élément de connexion. Le cadenas peut être débloqué au moyen d'une clé et/ou d'une combinaison de chiffres à saisir. La clé et/ou la combinaison de chiffres sont des moyens de déblocage qui sont exclusivement du ressort de la personne autorisée.

Dans un mode de réalisation qui ne fait pas partie de l'invention et qui est donné qu'à titre illustratif, l'élément de connexion est réalisé comme vis à filet de connexion, ledit filet de connexion étant vissé dans une ouverture filetée de l'élément de connexion complémentaire, l'élément de fixation étant réalisé comme segment de transmission de couple, lequel n'est en particulier exclusivement manipulable qu'à l'aide d'un moyen de déblocage, empêche un desserrage accidentel en ce qu'un segment de transmission de couple est exécuté de manière à ne pouvoir être actionné avec un outil standard, en particulier un contour standard pour tête de vis tel qu'un tournevis cruciforme, une clé six pans, quatre pans et/ou un contour de vis ronde à étoile à 6 branches. Un outil spécial est exigé pour desserrer la vis, à la disposition exclusive de la personne autorisée. L'outil spécial est un moyen de déblocage.

Dans un mode de réalisation alternatif qui ne fait pas partie de l'invention et qui est donné qu'à titre illustratif, la saillie transversale sur l'élément de connexion pourra aussi être réalisée sous forme de vis transversale, serrée dans un alésage transversal à filet intérieur de l'élément de connexion. Dans ce cas, la vis transversale présentera un segment de transmission de couple à contour spécial, actionnable exclusivement au moyen de l'outil spécial.

Un système de montage, dont l'élément de connexion est réalisé sous forme de tige, en particulier de boulon ou de vis, permet de recourir à des éléments de connexion standard. Des connexions à boulon sont usuelles sur les constructions de grue et connues des opérateurs de grue.

Une grue, avec une tour, une partie supérieure pouvant être raccordée à la tour, et avec un système de montage selon l'invention, est pour l'essentiel pourvue des avantages du système de montage en tant que tel, auquel il est ici renvoyé. La grue est en particulier réalisée comme grue à tour et elle permet un processus de montage sûr, pour introduire un tronçon de mât additionnel dans la tour et/ou retirer un tronçon de mât de la tour.

Une grue, dont la tour et la partie supérieure peuvent être raccordées, en particulier de manière amovible, au moyen de boulons, permet un raccordement simple de la partie supérieure à la tour.

Un procédé de montage d'un tronçon de mât dans une tour d'une grue selon l'invention et/ou de retrait dudit tronçon de mât hors de la tour, comprenant les étapes suivantes :
- préparation d'une grue selon l'invention,
- déplacement de la cage jusqu'à ce que les éléments de connexion complémentaire de cage et les éléments de connexion complémentaire de partie supérieure soient alignés,
- mise en place d'un élément de connexion avec un élément de fixation respectif dans les éléments de connexion complémentaires alignés correspondants, ledit élément de fixation étant réalisé sous forme de cadenas passé en particulier dans un alésage transversal de l'élément de connexion,
- raccordement de la partie supérieure à la cage,
- desserrage de la connexion de la partie supérieure avec la tour,
- montage dans la tour et/ou retrait d'un tronçon de mât hors de celle-ci,
- nouveau raccordement de la partie supérieure avec la tour,
- actionnement de l'élément de fixation par un opérateur autorisé,
garantit que seule une personne autorisée au retrait des éléments de connexion desserre ceux-ci.

Les caractéristiques exposées dans l'invention sont appropriées pour perfectionner l'objet de l'invention, séparément ou en combinaison entre elles. Les différentes combinaisons de caractéristiques ne constituent aucune restriction pour l'objet de l'invention, puisqu'elles n'ont qu'un caractère essentiellement exemplaire.

D'autres caractéristiques, avantages et particularités de l'invention ressortent des figures annexées à la description ci-dessous d'exemples d'exécution illustrés par celles-ci. Elles représentent :
Fig. 1 une vue de côté schématique d'une grue à tour avec un système de montage,
Fig. 2 une vue en perspective agrandie d'un fragment d'une grue à tour avec un système de montage suivant un premier exemple d'exécution,
Fig. 3 une vue en coupe agrandie suivant la ligne de coupe III-III de la fig. 2, et
Fig. 4 une vue correspondant à la fig. 3 d'un élément de fixation suivant un autre exemple d'exécution qui ne relève pas de l'invention et qui est donné qu'à titre illustratif.

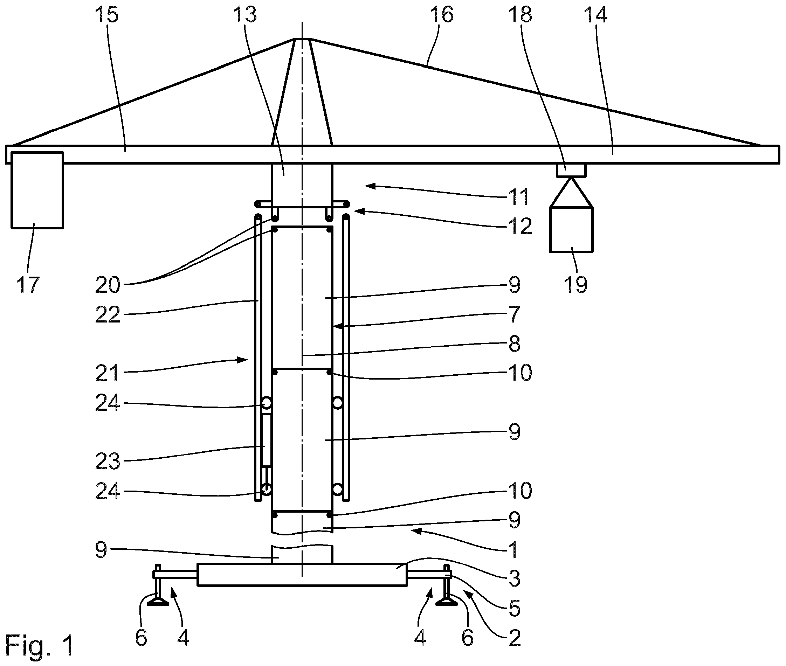

La grue 1 représentée en fig. 1 est une grue à tour. La grue 1 présente une base 2 par laquelle la grue 1 s'appuie au sol. La base 2 comprend une partie centrale 3 contre laquelle sont disposés plusieurs supports d'appui 4. Les supports d'appui 4 présentent chacun en particulier un élément de soutien horizontal 5 et un cylindre d'appui 6.

Une tour 7 est fixée sur le haut de la base 2. La tour 7 présente un axe longitudinal de tour 8. La mise en place de la base 2 peut être effectuée au moyen des cylindres d'appui 6, de manière à orienter sensiblement verticalement l'axe longitudinal de tour 8. Les cylindres d'appui 6 permettent une mise à niveau de la base 2 telle que la base 2 soit orientée sensiblement horizontalement dans sa partie centrale 3.

La tour 7 comprend plusieurs tronçons de mât 9. Les tronçons de mât 9 sont disposés successivement le long de l'axe longitudinal de tour 8 et raccordés l'un à l'autre de manière amovible par des boulons 10.

Sur un côté de sommet opposé à la base 2, la tour 7 est raccordée à une partie supérieure 11. La partie supérieure 11 présente une unité de connexion 12, qui sert au raccordement de la partie supérieure 11 avec la tour 7. La partie supérieure 11 présente en outre une couronne d'orientation 13. La couronne d'orientation 13 permet la rotation d'une flèche 14 par rapport à l'axe longitudinal de la tour 8. La flèche 14 est raccordée à la couronne d'orientation 13 et haubanée par un tirant 16 à une contre-flèche 15. La flèche 14 et la contre-flèche 15 sont diamétralement opposées l'une à l'autre par rapport à l'axe longitudinal de tour 8. Un contrepoids 17 peut être disposé sur la contre-flèche 15.

Un dispositif de chariot 18 pour le levage et la translation d'une charge 19 est disposé sur le bas de la flèche 14.

Pour le raccordement de la partie supérieure 11 à la tour 7, la partie supérieure 11, en particulier l'unité de connexion 12 et la tour 7 sont respectivement pourvues d'ouvertures de connexion principales 20 qui sont disposées en alignement les unes par rapport aux autres de manière à permettre leur jonction au moyen d'un boulon 10. Un boulon 10 engagé dans les ouvertures de connexion principales 20, disposées en alignement, de la partie supérieure 11 et de la tour 7 assure le raccordement de la partie supérieure 11 à la tour 7.

La grue 1 comprend en outre un système de montage 21. Le système de montage 21 permet d'introduire un tronçon de mât 9 supplémentaire dans la tour 7, et de retirer de la tour 7 un tronçon de mât 9 à démonter.

Le système de montage 21 comporte une cage 22 qui est disposée concentriquement à l'axe longitudinal de tour 8 par rapport à la tour 7. La cage 22 est déplaçable le long de l'axe longitudinal de la tour 8. La cage 22 présente un entraînement de cage 23 non représenté en détail, destiné à générer un mouvement d'entraînement pour la translation de la cage 22 par rapport à la tour 7. L'entraînement de cage 23 est disposé entre la tour 7 et la cage 22 par rapport à l'axe longitudinal de tour 8. L'entraînement de cage 23 comprend un moteur, en particulier un moteur électrique destiné à générer une force d'entraînement. L'entraînement de cage 23 comprend plusieurs rouleaux 24 au moyen desquels la cage 22 peut se déplacer contre la tour 7. Au moins un des rouleaux 24 est entraîné par le moteur.

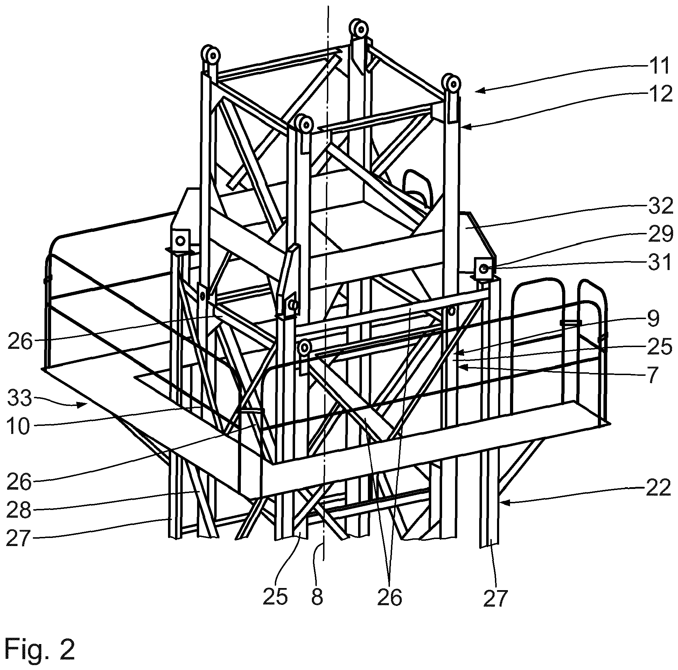

La fig. 2 est une vue en perspective agrandie du raccordement de la partie supérieure 11, en particulier de l'unité de connexion 12 de la partie supérieure 11, avec un tronçon de mât 9 de la tour 7 et avec la cage 22.

Les tronçons de mât 9 de la tour 7 sont réalisés chacun comme élément de tour en treillis. Les éléments de tour en treillis présentent chacun quatre éléments de membrure 25 qui s'étendent parallèlement à l'axe longitudinal de tour 8. Les éléments de membrure 25 sont raccordés les uns aux autres par des éléments transversaux 26, en étant ainsi renforcés. Les éléments transversaux 26 sont orientés transversalement et en particulier perpendiculairement aux éléments de membrure 25. Les éléments de membrure 25 sont disposés dans les coins d'un rectangle, en particulier d'un carré tendu sur un plan perpendiculaire à l'axe longitudinal de tour 8.

A leurs extrémités frontales, les tronçons de mât 9 présentent des ouvertures de connexion. Des ouvertures de connexion présentées au bas de l'unité de connexion 12, sont disposées en alignement avec les ouvertures de connexion correspondantes du tronçon de mât 9 supérieur, représenté en fig. 2, et raccordées par un boulon de connexion 10. Dans cet agencement, la partie supérieure 11 est fixement raccordée à la tour 7.

La cage 22 entoure la tour 7. La cage 22 a une construction géométrique similaire à celle de la tour 7. La cage 22 comprend quatre éléments de membrure 27 qui sont raccordés les uns aux autres par des éléments transversaux 28, en étant ainsi renforcés. Les éléments de membrure 27 de la cage 22 sont disposés dans les coins d'un rectangle, en particulier d'un carré.

Aux extrémités supérieures des éléments de membrure 27 sont prévues des ouvertures de cage en tant qu'éléments de connexion complémentaire de cage 29, lesquels sont disposés en alignement avec des ouvertures de la partie supérieure en tant qu'éléments de connexion complémentaires de partie supérieure 30. Un boulon de connexion est engagé en tant qu'élément de connexion 31 dans les éléments de connexion complémentaires 29, 30 alignés respectifs.

La partie supérieure 11, en particulier l'unité de connexion 12, comprend au moins un, en particulier quatre éléments de connexion complémentaires de partie supérieure, qui peuvent coopérer chacun avec au moins un élément de connexion complémentaire de cage 29, si bien que la cage 22 peut être raccordée de manière amovible à la partie supérieure 11 en recourant à l'élément de connexion 31. La partie supérieure 11, en particulier l'unité de connexion 12, présente en outre au moins une, en particulier au moins quatre ouvertures de connexion permettant un raccordement amovible de la partie supérieure 11 aux tronçons de mât 9 de la tour 7.

Les éléments de connexion complémentaires de partie supérieure 30 sont notamment réalisés comme plaques additionnelles 32 fixées chacune, et en particulier soudées sur la face extérieure d'un élément de membrure de la partie supérieure 11, en particulier de l'unité de connexion 12. Les plaques additionnelles 32 sont orientées sur un plan vertical, lequel est un plan comprenant l'élément de membrure de la partie supérieure 11, d'une part, et l'élément de membrure 27 correspondant de la cage 22, d'autre part. La plaque additionnelle 32 définit le plan de connexion entre les éléments de la partie supérieure 11 et de la cage 22. La plaque additionnelle 32 est en particulier orientée radialement par rapport à l'axe longitudinal de tour 8.

Une plate-forme périphérique 33 est prévue contre la cage 22. La plate-forme 33 permet à un opérateur d'introduire les boulons 10 et/ou les éléments de connexion 31 dans les ouvertures correspondantes, ou de retirer ceux-ci des ouvertures.

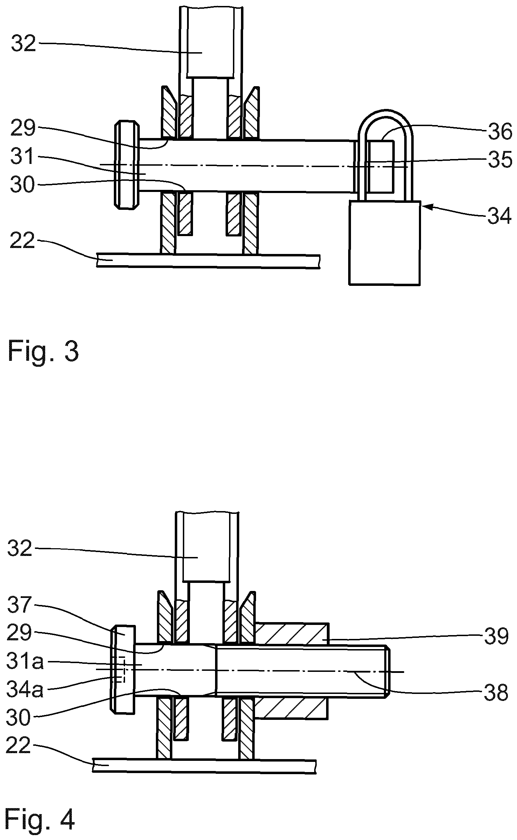

Il ressort manifestement de l'illustration de la fig. 3 que l'élément de connexion 30 est fixé par un élément de fixation 34 sous la forme d'un cadenas. Le cadenas est à cet effet passé dans un alésage transversal 35 de l'élément de connexion 31. L'ouverture du cadenas est indispensable pour retirer l'élément de fixation 34 de l'alésage transversal 35. Pour cela, une clé spéciale et/ou une combinaison de chiffres est exigée, et exclusivement détenue par un opérateur autorisé à cet effet. Des personnes non autorisées sont dans l'impossibilité de retirer l'élément de fixation 34. Le démontage accidentel de la connexion de la partie supérieure 11 à la cage 22 est exclu. Pour ouvrir l'élément de fixation 34, autrement dit pour débloquer l'élément de fixation 34, un moyen de déblocage est exigé, fourni par la clé et/ou par la combinaison de chiffres appropriée pour le cadenas.

L'élément de fixation 34 est un élément de fixation mécanique, qui est prévu en complément de l'élément de connexion 31 qui empêche mécaniquement que l'élément de connexion 31 puisse être retiré des éléments de connexion complémentaires 29, 30 alignés. L'élément de fixation 34 dépasse de la surface périphérique cylindrique extérieure 36 de l'élément de connexion 31 et forme un élément en contre-dépouille par rapport aux éléments de connexion complémentaires 29, 30 alignés.

Un deuxième exemple d'exécution, qui ne relève pas de l'invention et qui est donné qu'à titre illustratif, sera décrit ci-dessous en référence à la fig. 4. Des pièces de construction identique sont pourvues des mêmes signes de référence que dans le premier exemple d'exécution, à la description duquel il est en l'occurrence renvoyé. Des pièces de constructions différentes, quoique fonctionnellement équivalentes, sont pourvues des mêmes signes de référence avec un « a » postposé.

La principale différence avec l'exemple d'exécution qui précède est que l'élément de fixation 34a est réalisé comme segment de transmission de couple sur une vis. La vis constitue l'élément de connexion 31a. Dans l'exemple d'exécution représenté, l'élément de fixation 34a est réalisé comme contour intérieur sur la tête de vis 37. Le contour est exécuté de manière non circulaire par rapport à l'axe longitudinal 38 de la vis. En particulier, le contour intérieur servant d'élément de fixation 34a n'est pas un contour pour outil standard. Le contour intérieur 34a n'est notamment pas un contour pour une clé six pans, une fente et/ou un contour cruciforme. Le contour intérieur 34a est en particulier un contour spécial pour lequel un outil spécial servant de moyen de déblocage est exigé.

L'outil spécial n'est rendu disponible que pour l'opérateur autorisé à dévisser l'élément de connexion 31a de l'écrou de connexion 39, lequel est en particulier fixé solidairement en rotation contre la cage 22 et/ou contre la plaque additionnelle 32. Il est également concevable de renoncer aux éléments de connexion 39 et d'intégrer dans les éléments de connexion complémentaire de cage 29 et/ou dans l'ouverture de partie supérieure 30 un filet intérieur correspondant au filet extérieur de la vis 31a. Il est également concevable de réaliser l'écrou de connexion 39 indépendamment de la cage 22 et/ou de la partie supérieure 11.

Le fonctionnement de la tour 1 avec un système de montage 21 sera expliqué en détail ci-après. Pour retirer p. ex. de la tour 7 l'élément, le tronçon de mât 9 présenté en dessous de la partie supérieure 11 en fig. 1, le système de montage 21 est d'abord déplacé vers la position représentée en fig. 1 au moyen de l'entraînement de cage 23. Dans cette position, les éléments de connexion complémentaires 29, 30 de la cage 22 et de la partie supérieure 11 peuvent être alignés les uns avec les autres et être raccordés par un élément de connexion 31. Cet agencement est représenté en fig. 2 et 3.

Les éléments de connexion 10 sont ensuite desserrés entre le tronçon de mât 9 supérieur et l'unité de connexion 12 ainsi qu'entre le tronçon de mât 9 supérieur et le tronçon de mât 9 inférieur, et le tronçon de mât 9 ainsi libéré est retiré du système de montage 21, en particulier par le côté. Le système de montage 21 est alors descendu avec la partie supérieure 11 qui lui est raccordée, jusqu'à ce que les éléments de connexion complémentaires 30 de la partie supérieure soient alignés avec les éléments de connexion complémentaires de cage correspondants du tronçon de mât 9 devenu supérieur. Les éléments de connexion complémentaires 29, 30 ainsi disposés sont raccordés par des boulons 10. Un opérateur habilité ou autorisé à cet effet peut ensuite débloquer les éléments de fixation 34 et sortir les éléments de connexion 21 des ouvertures alignées 29, 30. Un raccordement de la cage 22 avec la partie supérieure 21 n'est plus nécessaire.

Du fait que le moyen de déblocage pour le desserrage de la connexion sécurisée par retrait de l'élément de fixation 34 n'est détenu que par l'opérateur habilité à cet effet, le risque d'accident consécutif à une manoeuvre erronée est réduit.

Le montage d'un tronçon de mât supplémentaire dans la tour est effectué dans l'ordre inverse, la partie supérieure étant desserrée de la tour, la partie supérieure étant raccordée à la cage et soulevée avant que le nouveau tronçon de mât soit introduit et raccordé à la tour existante et à la partie supérieure. Le raccordement de la partie supérieure à la cage est ensuite desserré, le déblocage des éléments de fixation 34 par l'opérateur autorisé ne pouvant être réalisé qu'après que la partie supérieure est à nouveau fiablement raccordée à la tour.

La grue selon l'invention est sûre.

## Revendications

1. Système de montage pour une grue (1), avec une cage (22) déplaçable le long d'une tour (7) de la grue (1), laquelle peut être raccordée de manière amovible à une partie supérieure (11) de la grue (1) par des éléments de connexion (31), **caractérisé par** au moins un élément de fixation (34) pour une fixation empêchant le desserrage accidentel d'au moins un élément de connexion (31),
le desserrage de l'au moins un élément de fixation (34) étant exclusivement possible à l'aide d'un moyen de déblocage ;
dans lequel les éléments de connexion (31) coopèrent chacun avec un élément de connexion complémentaire de cage (29) et avec un élément de connexion complémentaire de partie supérieure (30) ;
et dans lequel l'élément de fixation (34) est réalisé sous forme de cadenas passé en particulier dans un alésage transversal (35) de l'élément de connexion (31), ledit élément de fixation (34) empêchant un retrait accidentel de l'élément de connexion (31) hors des éléments de connexion complémentaires (29, 30) alignés.

2. Système de montage selon la revendication 1, **caractérisé en ce que** les éléments de connexion complémentaires (29, 30) sont réalisés comme ouvertures alignées, dans lesquelles l'élément de connexion (31) peut être inséré.

3. Système de montage selon la revendication 1 ou 2, **caractérisé en ce que** l'élément de fixation (34) empêche le retrait accidentel de l'élément de connexion (31) hors des éléments de connexion complémentaires (29, 30) alignés à l'aide d'au moins une saillie transversale présentée en particulier sur une surface périphérique (36) de l'élément de connexion (31).

4. Système de montage selon l'une des revendications précédentes, **caractérisé en ce que** l'élément de connexion (31) est réalisé sous forme de tige, en particulier de boulon ou de vis.

5. Système de montage selon l'une des revendications précédentes, **caractérisé en ce que** le moyen de déblocage est une clé et/ou une combinaison de chiffres appropriée pour le cadenas.

6. Grue (1), avec une tour (7), une partie supérieure (11) pouvant être raccordée à la tour (7), et avec un système de montage (21) selon l'une des revendications précédentes.

7. Grue selon la revendication 6, **caractérisée en ce que** la tour (7) et la partie supérieure (11) peuvent être raccordées, en particulier de manière amovible, au moyen de boulons (10).

8. Procédé de montage d'un tronçon de mât (9) dans une tour (7) d'une grue (1) selon la revendication 6 ou la revendication 7 et/ou de retrait dudit tronçon de mât hors de la tour, comprenant les étapes suivantes :
- préparation de la grue (1) selon la revendication 6 ou la revendication 7,
- déplacement de la cage (22) jusqu'à ce que les éléments de connexion complémentaire de cage (29) et les éléments de connexion complémentaire de partie supérieure (30) soient alignés,
- mise en place d'un élément de connexion (31) avec un élément de fixation (34) respectif dans les éléments de connexion complémentaires (29, 30) alignés correspondants, ledit élément de fixation (34) étant réalisé sous forme de cadenas passé en particulier dans un alésage transversal (35) de l'élément de connexion (31),
- raccordement de la partie supérieure (11) à la cage (22),
- desserrage de la connexion de la partie supérieure (11) avec la tour (7),
- montage dans la tour (7) et/ou retrait d'un tronçon de mât (9) hors de celle-ci,
- nouveau raccordement de la partie supérieure (11) avec la tour (7),
- actionnement de l'élément de fixation (34) par un opérateur autorisé.

## Patentansprüche

1. Montagesystem für einen Kran (1) mit einem Käfig (22), der entlang eines Turms (7) des Krans (1) verschiebbar ist, und der durch Verbindungselemente (31) abnehmbar an einen oberen Teil (11) des Krans (1) angeschlossen werden kann, **gekennzeichnet durch** mindestens ein Befestigungselement (34) für eine Befestigung, die ein versehentliches Lösen mindestens eines Verbindungselements (31) verhindert,
wobei das Lösen des mindestens einen Befestigungselements (34) ausschließlich mit Hilfe eines Entriegelungsmittels möglich ist;
wobei die Verbindungselemente (31) jeweils mit einem komplementären Verbindungselement (29) des Käfigs und mit einem komplementären Verbindungselement (30) des oberen Teils zusammenwirken;
und wobei das Befestigungselement (34) in Form eines Vorhängeschlosses ausgebildet ist, das insbesondere durch eine Querbohrung (35) des Verbindungselements (31) geführt wird, wobei das Befestigungselement (34) ein versehentliches Herausziehen des Verbindungselements (31) aus den ausgerichteten komplementären Verbindungselementen (29, 30) verhindert.

2. Montagesystem nach Anspruch 1, **dadurch gekennzeichnet, dass** die komplementären Verbindungselemente (29, 30) als ausgerichtete Öffnungen ausgebildet sind, in die das Verbindungselement (31) einsetzbar ist.

3. Montagesystem nach Anspruch 1 oder 2, **dadurch gekennzeichnet, dass** das Befestigungselement (34) ein versehentliches Herausziehen des Verbindungselements (31) aus den ausgerichteten komplementären Verbindungselementen (29, 30) verhindert, mit Hilfe von mindestens einem Quervorsprung, der insbesondere auf einer Umfangsoberfläche (36) des Verbindungselements (31) vorhanden ist.

4. Montagesystem nach einem der vorhergehenden Ansprüche, **dadurch gekennzeichnet, dass** das Verbindungselement (31) in Form eines Stabes ausgebildet ist, insbesondere eines Bolzens oder einer Schraube.

5. Montagesystem nach einem der vorhergehenden Ansprüche, **dadurch gekennzeichnet, dass** das Entriegelungsmittel ein Schlüssel und/oder eine Zahlenkombination ist, die für das Vorhängeschloss passend ist.

6. Kran (1) mit einem Turm (7), wobei ein oberer Teil (11) an den Turm (7) anschließbar ist, und mit einem Montagesystem (21) nach einem der vorhergehenden Ansprüche.

7. Kran nach Anspruch 6, **dadurch gekennzeichnet, dass** der Turm (7) und der obere Teil (11), insbesondere abnehmbar, angeschlossen werden können, unter Verwendung von Bolzen (10).

8. Verfahren zum Montieren eines Mastabschnitts (9) in einem Turm (7) eines Krans (1) nach Anspruch 6 oder Anspruch 7, und/oder Herausziehen des Mastabschnitts aus dem Turm, die folgenden Schritte umfassend:
- Vorbereiten des Krans (1) nach Anspruch 6 oder Anspruch 7,
- Verschieben des Käfigs (22), bis die komplementären Verbindungselemente (29) des Käfigs und die komplementären Verbindungselemente (30) des oberen Teils ausgerichtet sind,
- Anordnen eines Verbindungselements (31) mit einem jeweiligen Befestigungselement (34) in den entsprechenden ausgerichteten komplementären Verbindungselementen (29, 30), wobei das Befestigungselement (34) in Form eines Vorhängeschlosses ausgebildet ist, das insbesondere durch eine Querbohrung (35) des Verbindungselements (31) geführt wird,
- Anschließen des oberen Teils (11) an den Käfig (22),
- Lösen der Verbindung des oberen Teils (11) mit dem Turm (7),
- Montieren im Turm (7) und/oder daraus Herausziehen eines Mastabschnitts (9),
- erneutes Anschließen des oberen Teils (11) an den Turm (7),
- Handhaben des Befestigungselements (34) durch einen autorisierten Bediener.

## Claims

1. A mounting system for a crane (1), with a cage (22) movable along a tower (7) of the crane (1), which may be removably connected to an upper part (11) of the crane (1) by connection elements (31), **characterized by** at least one fastening element (34) for fastening which prevents accidental loosening of at least one connection element (31),
the loosening of the at least one fastening element (34) being exclusively possible using an unlocking means;
wherein the connection elements (31) each cooperate with a cage complementary connection element (29) and with an upper part complementary connection element (30);
and wherein the fastening element (34) is realized in the form of a padlock passed in particular through a transverse bore (35) of the connection element (31), said fastening element (34) preventing accidental removal of the connection element (31) from the aligned complementary connection elements (29, 30).

2. The mounting system according to claim 1, **characterized in that** the complementary connection elements (29, 30) are produced as aligned openings, into which the connection element (31) may be inserted.

3. The mounting system according to claim 1 or 2, **characterized in that** the fastening element (34) prevents accidental removal of the connection element (31) from the aligned complementary connection elements (29, 30) using at least one transverse projection presented in particular on a peripheral surface (36) of the connection element (31).

4. The mounting system according to any of the preceding claims, **characterized in that** the connection element (31) is produced in the form of a rod, in particular of a bolt or a screw.

5. The mounting system according to any of the preceding claims, **characterized in that** the unlocking means is a key and/or a combination of numbers suitable for the padlock.

6. A crane (1), with a tower (7), an upper part (11) which may be connected to the tower (7), and with a mounting system (21) according to any of the preceding claims.

7. The crane according to claim 6, **characterized in that** the tower (7) and the upper part (11) may be connected, in particular in a removable manner, by means of bolts (10).

8. A method for mounting a mast section (9) in a tower (7) of a crane (1) according to claim 6 or claim 7 and/or for removing said mast section from the tower, comprising the following steps of:
- preparing the crane (1) according to claim 6 or claim 7,
- displacing the cage (22) until the cage complementary connection elements (29) and the upper part complementary connection elements (30) are aligned,
- placing a connection element (31) with a respective fastening element (34) in the corresponding aligned complementary connection elements (29, 30), said fastening element (34) being realized in the form of a padlock passed in particular through a transverse bore (35) of the connection element (31),
- connecting the upper part (11) to the cage (22),
- loosening the connection of the upper part (11) with the tower (7),
- mounting in the tower (7) and/or removing of a mast section (9) from it,
- establishing a new connection of the upper part (11) with the tower (7),
- actuating the fastening element (34) by an authorized operator.
